# EUROPEAN PATENT SPECIFICATION

(11) **EP 4 349 607 B1**
(45) Date of publication and mention of the grant of the patent: **02.12.2026**
(21) Application number: 23201450.6
(22) Date of filing: 03.10.2023
(51) Int. Cl.: B41J 11/00, B41M 7/00, B65B 61/02, B31B 50/88, B32B 38/14, B32B 38/16, B32B 27/08, B32B 29/00

(54) **METHOD FOR MANUFACTURING A LAMINATED PACKAGING MATERIAL WEB**
VERFAHREN ZUR HERSTELLUNG EINER LAMINIERTEN VERPACKUNGSMATERIALBAHN
PROCÉDÉ DE FABRICATION D'UNE BANDE DE MATÉRIAU D'EMBALLAGE STRATIFIÉE

(30) Priority: 03.10.2022 EP 22199398; 15.12.2022 EP 22213975
(43) Date of publication of application: 10.04.2024
(73) Proprietor: Tetra Laval Holdings & Finance S.A., 1009 Pully (CH)
(72) Inventor: OLSSON, Sverker, 221 86 Lund (SE); ERIKSON, Fredrik, 221 86 Lund (SE)
(74) Representative: Tetra Pak Patent Attorneys

(56) References cited:
- EP-B1- 3 459 726
- US-A1- 2019 047 299
- US-B2- 10 744 794
- US-B2- 11 001 028

## Description

### Technical Field

The invention relates to a method for manufacturing a laminated packaging material web for liquid food packaging containers.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard layer, forming the core layer of the laminated packaging material, is typically printed on the outside (i.e., the side intended as the exterior side of the laminated packaging material), for example by digital, like inkjet, printing, dried, and laminated in between sealable layers. Optionally, the paperboard layer may be pre-coated before the printing, and/or already be bonded to one or more layers.

During the entire converting process, it is important to maintain a desired moisture level of the paperboard layer; not only for ensuring optimum performance of various converting processes, but also to control the desired properties of the final packaging container.

A suggested technique for drying the paperboard layer after printing, particularly digital printing, using water-based inks, such as pigmented water-based inks, is infrared radiation. While this technique allows for a fast drying, it has been observed that more powerful drying will also dry the paperboard layer, i.e., the moisture content of the paperboard layer will be reduced. The moisture loss in an area of the paperboard layer will vary with the printed design and, in particular, will be related to the color printed on the area, particularly the amount of black pigment. For the liquid food packaging materials, printed inks may not be covered by a coating, like a varnish, after printing. They are laminated by, for example, polymer layers to protect the printing after dried. Therefore, over drying, especially of unprinted, surfaces may be hard to avoid while drying the ink printed areas. Thus, even drying becomes hard to provide. A low paperboard moisture content will affect the converting process negatively, especially when the paperboard layer is creased prior to lamination. If the moisture content of the paperboard layer is reduced to a certain level, the paperboard layer will crack rather than bend, potentially reducing the quality of the final laminated packaging material web and the packaging containers produced from the laminated packaging material web. On the other hand, if the printed design is not sufficiently dried, it may result in defects related to scuffing or smearing of the printed colour pattern of the decor layer. Thus, there is a need in the art for improvements of manufacturing techniques for laminated packaging material webs, especially with regards to ink drying.

One prior art publication in the filed is US2019/047299A1. This publication relates to an ink-jet printing method that is capable of obtaining good printed materials that are free of occurrence of color migration and deformation of a printing medium even when printed on a resin printing medium. That provides an ink-jet printing method using a water-based ink containing a black ink, a chromatic ink and a white ink which each contain a pigment, an organic solvent having a boiling point of not lower than 90° C and lower than 250° C, and water, said method including step 1 of ejecting at least one water-based ink selected from the group consisting of the black ink and the chromatic ink onto a transparent resin printing medium to print an image on the printing medium; step 2 of ejecting the white ink onto the resulting image to print a white image that covers the image on the printing medium; and step 3 of heating and drying the resulting printed material from a side of a surface of the printing medium on which the white image is formed, using an infrared heater.

### Summary

It is an object of the invention to overcome at least partly one or more of the above-identified limitations of the prior art. In particular, it is an object to provide a reliable and efficient method for manufacturing a laminated packaging material web with a maintained moisture level of the paperboard layer, even when the printed design varies.

To solve these objects a continuous in-line method for manufacturing a laminated packaging material web is provided. The method comprises inkjet printing a plurality of ink droplets on a paperboard layer, for instance to form a decor layer, the ink droplets comprising color pigments and a solvent; determining a proportion of a first subset of the ink droplets in relation to the full plurality of ink droplets, the first subset comprising color pigments of only one specific color; determining an adjusted drying power based on the determined proportion of the first subset of the ink droplets; and evaporating, in other words, drying, at least some of the solvent by applying hot air and/or infrared radiation at the adjusted drying power such that the color pigments are immobilized. This is advantageous in that the moisture content of the paperboard layer is substantially maintained, even when the printed design varies. The moisture content of the paperboard layer may for instance be 4% or more, between 5% and 10%, or preferably between 5% and 8.5%.

The first subset of the ink droplets has a dark color, a color having more black pigment compared to other colors, lighter colors, in comparison with the full plurality of ink droplets. Determining an adjusted drying power based on a proportion of dark colored ink droplets is an efficient way to dry a printed decor on a paperboard layer such that the moisture content of the paperboard is maintained, even when the design of the decor varies. Especially for IR drying, darker colors tend to absorb more IR radiation thereby generating more heat, increasing the surface temperature and dry out the moisture content of the paperboard layer. By setting a drying power limit for a dark area, even when it is only a subset of the used ink, will then limit the increase of the surface temperature also for printed areas with a lighter color, which consequently will assist in maintaining a sufficiently high moisture content in the paperboard layer.

The highly probable paperboard layer is one used for a liquid food packaging. In other words, the highly probable laminated packaging material web is a laminated liquid food packaging material web, alternatively named as liquid packaging board.

The paperboard used in the liquid packaging board, in general, has a face, called top surface, optimized for printing, and other face, back surface, having water repellent properties to withstand water absorption from outer environment. Therefore, the paperboard is not suitable to moisten from back surface, if needed like being over-dried after drying. For a paperboard printed by water-based inks also can not be moisten after drying from top surface to avoid resolving the pointed ink. Re-moistening may also be not preferred for liquid food packaging material production due to food safety requirements.

In one embodiment, printing may be performed up to more than 200% TAC (Total Area Coverage) with CMYK (cyan, magenta, yellow, and black) combinations. These printings can not be dried by infrared only without overheating the black coloured areas. That causes over drying the paperboard areas, and leading uneven drying and moisture content in the paperboard.

In one embodiment, the ink may have not only water but also some organic volatiles. The water and volatile organic content combination may lead higher boiling point to dry the ink. Thus, it may need higher drying energy that may lead over drying of the paperboard, if only IR is employed.

The method may further comprise flexographic printing, or other printing techniques, and the décor layer may hence be obtained by inkjet printing only, or by a hybrid approach combining two or more printing techniques. In other words, the décor layer may be inkjet printed and flexography printed. Ink used for inkjet printing may comprise a higher ratio of solvent relative color pigment than ink used for flexographic printing. For instance, inkjet ink may comprise approximately 4 times more water content than flexographic ink. Further, the total amount of ink laid down on the paperboard layer is several times more for inkjet printing as compared to flexographic printing. Hence, for inkjet printing, it is even more important to provide a fast drying process that does not reduce the moisture content of the paperboard layer.

The method may further comprise applying a print substrate layer to said paperboard layer prior to inkjet printing.

In an embodiment, the invention may be more beneficial when the paperboard layer needs to be dried as quick as possible. For instance, if the paperboard has a print substrate layer that avoids migration of the solvent of the ink, which is most likely water-based ink, by the paperboard, then drying as quick as possible without over drying the packaging material may be more beneficial. In other words, if the paperboard has a print substrate layer that can keep almost all solvent of the ink, which is most likely water-based ink, printed on the print substrate layer, then drying as quick as possible without over drying the packaging material may be more beneficial.

Applying a print substrate may for instance comprise coating the paperboard layer with a pre-coating, or priming the paperboard layer by a plasma treatment to create an optimal surface tension / wettability for the print substrate layer on the surface of the paperboard layer, or applying a surface conditioner, thereby changing the topology or properties relating to static electricity. The print substrate may fully cover the paperboard layer, it may cover only the areas to be covered by the decor layer, or they may cover an intermediately sized area of the paperboard layer.

In an embodiment, the paperboard layer may comprise a printable coating, for instance a white pigment and clay-coating as the print substrate layer. Such a clay coating will form a water repellant surface on the paperboard layer meaning that the solvent of the ink cannot migrate be absorbed into the paperboard fibrous layer. This requires an increased drying power, as it is important to dry the ink fast before being subjected to further downstream processes.

In an embodiment, the print substrate layer may be a clay-coating that is also primed before inkjet printing.

In an embodiment, the print substrate layer may be provided on the paperboard layer before the inkjet printing on the same production site; and/or well before, for example in another production site, so on the site, where the inkjet printing is realized, no application of the print substrate layer is realized.

In one embodiment, the proportion of the first subset of the ink droplets in relation to the full plurality of ink droplets is substantially constant for a pre-defined cyclically repeated printing pattern, and the adjusted drying power is determined for each pre-defined cyclically repeated printing pattern. This is beneficial as it allows for an efficient and uniform drying of each printing pattern, and facilitates a maintained moisture content of the paperboard layer.

In one embodiment, the method further comprises providing a crease line pattern to said paperboard layer. As an example, the crease line pattern may be repeated in a machine direction.

In a possible embodiment, a crease line may be provided upstream and/or downstream of inkjet printing.

Preferably, the paperboard layer has a thickness of minimum 90 µm, and/or a weight of minimum 65 gsm.

The paperboard layer may be an uncoated paperboard, or a paperboard laminated with one or more layers, for example polymer layers, before inkjet printing and/or application of the print substrate layer.

The paperboard layer may be transported along the machine direction at a substantially constant speed, for example on 200 m/min or faster.

In one embodiment, the solvent is evaporated by a combination of applying hot air and infrared radiation, and the hot air is applied after the infrared radiation.

In one embodiment, drying the décor layer further comprises controlling the moisture content of the paperboard layer by adjusting the ratio between the infrared radiation and the flow of hot air. This is beneficial as it allows for precise control of the décor layer and the paperboard layer, and facilitates a maintained moisture content at a minimized drying time.

Drying the décor layer may further comprise controlling the moisture content of the paperboard layer by adjusting the mass flow of the hot air to targeted flow velocity in the supply air slots in the dryer (i.e., impingement dryer), and by adjusting the temperature of the hot air.

The hot air dryers may have a slot velocity 45-85 m/s and air temperature 55-80°C. The humidity in the hot air fed by the hot air dryers to dry the decor layer may be controlled, preferably inline.

In one embodiment, the temperature of the paperboard may be controlled, preferably inline. If the printed and laminated packaging material has more than one lane, each one of the lanes that will be used to feed a liquid food filling machine may be controlled individually during the printing and/or drying and/or downstream of drying to avoid having temperature gradients.

In one embodiment, controlling the moisture level comprises determining a drying time, and determining the ratio between the infrared radiation and the flow of hot air by minimizing the amount of infrared radiation while still ensuring complete drying within the drying time. By this, issues related to moisture loss in the paperboard layer is minimized.

The drying the décor layer may be performed by exposing an area of the paperboard layer to infrared radiation, and subsequently exposing the same area of the paperboard layer to the flow of hot air. As an example, an area of the paperboard layer may be exposed to infrared radiation until a determined moisture level of the paperboard is reached, and the remaining drying of the décor layer may be carried out by the flow of hot air. By this, time efficiency of the method is ensured while still ensuring a desired level of moisture content in the paperboard layer.

The infrared radiation may have a spectral emission within 0.4 µm - 4 µm. In other words, the infrared radiation may be a near-infrared radiation, a short-wave infrared radiation, a mid-wave infrared radiation, or a radiation in several infrared regions.

The invention may perform without any re-humidification or moistening provided downstream of drying. Thus, an extra operation and controls related to that may be avoided.

In one embodiment, the method of printing and drying of the laminated packaging material may be performed roll-to-roll, meaning that a roll of paperboard may be unrolled upstream of printing, and rolled downstream of laminating with a further layer. Rolling of laminated packaging material causes friction and stretching forces on the printings, so the printings should be dried properly while not causing over drying of the paperboard. Additionally, if crease line patterns are formed on the laminated packaging material, these patterns should withstand against the friction and stretching forces by the help of maintained moisture content in the paperboard. A rolled packaging material web may be transported in a facilitated manner to a further step, like filling a product inside the packaging material web, probably a liquid food.

The order of method steps may be not limiting for the invention. Various order of the mentioned steps may be used by the skilled person as long as being technically possible to achieve the advantage of maintaining substantially the moisture content of the paperboard layer by IR drying and hot air drying.

The ink solvent may comprise of different volatile and nonvolatile organic content, such as for instance glycol. The ink solvent may comprise water.

In one embodiment, the method further comprises laminating at least a further layer to the printed paperboard layer.

In one embodiment, the evaporating at least some of the solvent by applying hot air and/or infrared radiation at the adjusted drying power is performed such that the surface temperature of the paperboard layer does not exceed 65°C, preferably the surface temperature of the paperboard layer does not exceed 60°C, more preferably the surface temperature of the paperboard layer does not exceed 56°C. By this, defects related to surface temperature of the paperboard layer are minimized. Further, increased control of the surface temperature facilitates increased control of the moisture content of the paperboard layer.

In one embodiment, after laminating at least a further layer, rolling the printed and laminated packaging material onto a roller may be performed. If a crease line pattern is provided to said paperboard layer, then rolling the printed, creased and laminated packaging material onto a roller may be performed, after laminating at least a further layer. Thus, a rolled packaging material web may be transported in a facilitated manner to a further step, like filling a product inside the packaging material web, probably a liquid food.

It is also explained, as not part of the invention, a converting unit configured to manufacture a laminated packaging material web. The converting unit may be configured to perform the continuous in-line method for manufacturing a laminated packaging material web described herein and therefore implies all aspects disclosed regarding that method. The converting unit comprises a paperboard layer feeding station, an inkjet printer configured to print an ink comprising color pigments and a solvent on the paperboard layer, a drying station configured to dry the ink at an adjusted drying power by exposing the paperboard layer to infrared radiation and a flow of hot air. The drying station comprises a control unit configured to determine the adjusted drying power based on a determined proportion of a first subset of the ink in relation to the full ink, the first subset comprising color pigments of only one specific color. By this, the moisture content of the manufactured paperboard layer will be maintained at a sufficiently high level, even when the printed design varies.

In an embodiment, the converting unit may comprise a creasing station configured to provide a crease line pattern to the paperboard layer.

The comprised stations may be arranged in the following order, upstream to downstream: paperboard layer feeding station, inkjet printer, drying station, creasing station.

The converting unit may further comprise at least one lamination station configured to laminate a plurality of layers to the printed and creased paperboard layer.

The drying station may comprise a separate hot air dryer and infrared dryer, and the hot air dryer may be arranged downstream the infrared dryer. By this, time efficiency of the method is ensured, while minimizing moisture loss in the paperboard layer.

It is also possible to have the creasing station upstream of the inkjet printer; or to have more than one creasing station located on both downstream and upstream of the inkjet printer; or having a combined unit for the inkjet printer and the creasing station that allows creasing before and/or after the printing.

The converting unit may further comprise a print substrate station configured to apply a print substrate layer to prepare the paperboard layer before being printed by the inkjet printer. As mentioned above, applying a print substrate layer may comprise coating the paperboard layer with a pre-coating, for instance a clay coating or a primed clay coating, or priming the paperboard layer by a plasma treatment to form the print substrate layer on the surface of the paperboard layer, or applying a surface conditioner or in other ways modify the properties of a surface of the paperboard layer. The converting unit may further comprise a second drying station for drying the print substrate layer.

The order of stations may be not limiting for the invention. Various order of the mentioned stations may be used by the skilled person as long as being technically possible to achieve the advantage of maintaining substantially the moisture content of the paperboard layer by IR drying and hot air drying.

In one embodiment, the converting unit may be a roll-to-roll unit, meaning that a roll of paperboard may be unrolled upstream of printing, and rolled downstream of laminating with a further layer. Rolling of laminated packaging material causes friction and stretching forces on the printings, so the printings should be dried properly while not causing over drying of the paperboard. Additionally, if crease line patterns are formed on the laminated packaging material, these patterns should withstand against the friction and stretching forces by the help of maintained moisture content in the paperboard. A rolled packaging material web may be transported in a facilitated manner to a further step, like filling a product inside the packaging material web, probably a liquid food.

In another aspect, not part of the invention, a laminated packaging material web is provided. The laminated packaging material web comprises a paperboard layer having an inkjet printed decor layer comprising a plurality of ink droplets. The moisture content of the paperboard layer is 4% or more, preferably between 5% and 8.5%.

As an example, the moisture content of the paperboard layer may be between 6% and 8.5% after inkjet printing the decor layer, and in the final laminated packaging material web, the moisture content of the paperboard layer may be substantially the same, or slightly lower. This implies that the paperboard layer has not suffered any significant moisture loss, at least of a magnitude that would result in any major defects of the laminated packaging material web.

The laminated packaging material may have a crease line pattern, for example, the crease line pattern may be cyclically repeated in a machine direction.

All embodiments of all aspects of the invention may be combined and be suitable for each other, if the contrary is not stated above or below.

Still other objectives, features, aspects, and advantages of the invention will appear from the following detailed description as well as from the drawings.

### Brief Description of the Drawings

Embodiments of the invention will now be described, by way of example, with reference to the accompanying schematic drawings, in which
Fig. 1 is a flow chart of a method for manufacturing a laminated packaging material web according to an embodiment.
Figs. 2a-c are schematic views of a printed paperboard layer according to an embodiment.
Fig. 3 is a cross-sectional view of a laminated packaging material web according to an embodiment.
Fig. 4 is a schematic side view of a converting unit according to an embodiment.

### Detailed Description

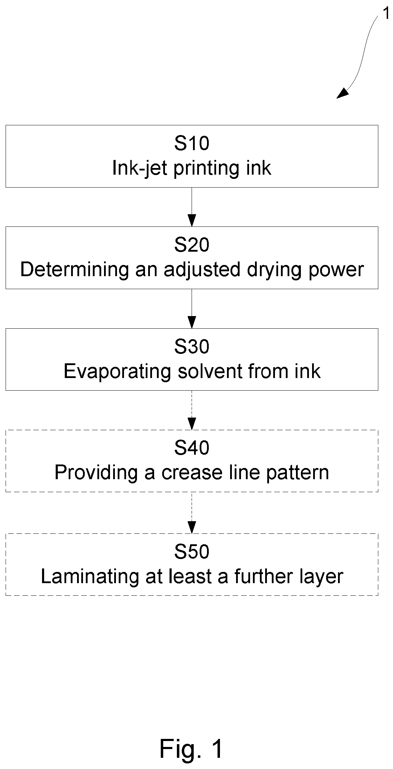

With reference to Fig. 1 an embodiment of a continuous in-line method 1 for manufacturing a laminated packaging material web 100 is illustrated. The method 1 comprises inkjet printing S10 a plurality of ink droplets 300 on a paperboard layer 130. The paperboard layer 130 may comprise paper, paperboard, or other cellulose-based material. Inkjet printing is a type of digital printing or computer printing. During inkjet printing, a digital image is recreated by jetting droplets of ink onto a substrate, such as a paperboard layer 130 or a print substrate layer (not shown) which will be further discussed herein. The ink droplets 300 comprise color pigments and a solvent. The solvent may comprise water and volatile organic content, for instance glycol. The method further comprises determining S20 an adjusted drying power based on a determined proportion of a first subset 310 of the ink droplets in relation to the full plurality of ink droplets 300, the first subset 310 comprising color pigments of only one specific color. Hence, the method 1 may select a specific color of the intended decor layer and from there the first subset 310 of ink droplets corresponding to the selected color. Based on the determined subset 310 of ink droplets, the method 1 determines the adjusted drying power.

The method further comprises evaporating S30 at least some of the solvent by applying hot air HA and/or infrared radiation IR at the adjusted drying power such that the color pigments are immobilized. Infrared radiation, hereinafter IR, radiates onto the paperboard layer, where it to some extent will be absorbed by pigments within the ink 300, causing solvent of the ink 300 to evaporate. By the step of evaporating S30 comprising IR, a more reliable process is ensured, which is unaffected by an air boundary layer. Infrared drying further facilitates a more time efficient process, as the energy transfer process is very efficient (High spectral energy per square area).

High radiation intensity going through the ink 300 does not only remove moisture from the ink 300 however, but also from the cellulose-based paperboard layer 130, and may result in a variety of issues regarding performance of the laminated packaging material web 100. A laminated packaging material web 100 comprising a paperboard layer 130 with a reduced moisture content may suffer from problems relating to cracks, especially in areas where multiple crease lines intersect, and delamination of the laminated packaging material web 100, as well as the integrity of the final packaging container. To minimize issues related to paperboard moisture losses, the drying power of the IR may be adjusted.

An adjusted drying power may be realized by varying spectral emission, radiation intensity or exposure time of the IR radiation, which will affect the level of transmission through the printed ink 300. The degree of darkness in the ink 300 will also affect transmission of IR, as black pigment absorbs more infrared radiation than other colors. It is beneficial to adjust the drying power based on a determined proportion of a subset 310 of ink droplets having a certain color in relation to the full ink 300, especially on a determined proportion of a subset of dark ink droplets 310. This ensures that the drying power is adequately adjusted, and that the moisture content of the paperboard is maintained, even under different design conditions. As an example, lighter colors, for example, Red, Green or Violet, demand higher IR energy to evaporate the solvent. On the other hand, darker colors, i.e., Black, Brown or Dark Green, may demand about 20% less IR energy.

Alternatively, or additionally, hot air drying may be utilized for evaporating S30 at least some of the solvent. Hot air drying is a simple and established technique in which ambient air is heated and the heat is transferred from the flow of hot air to a printed ink by convection, and evaporated solvent (i.e., with saturated air) from the ink is transported to the air also by convection. Hence, the hot air HA mainly affects the surface of the paperboard layer 130, and penetration into the paperboard is minimal. Adjusting the drying power of hot air HA may be performed by for example adjusting the flow or the temperature of the hot air HA.

It is preferred to dry the paperboard layer with a combination of IR and hot air HA to utilize the benefits of both techniques. The hot air HA may be applied after the IR. By this, the IR may first evaporate as much solvent as possible without losing too much moisture in the paperboard layer and securing that the paperboard temperature is kept below target, and the surface directed hot air HA may then evaporate the rest of the solvent, resulting in a highly time efficient process with maintained moisture content in the paperboard layer.

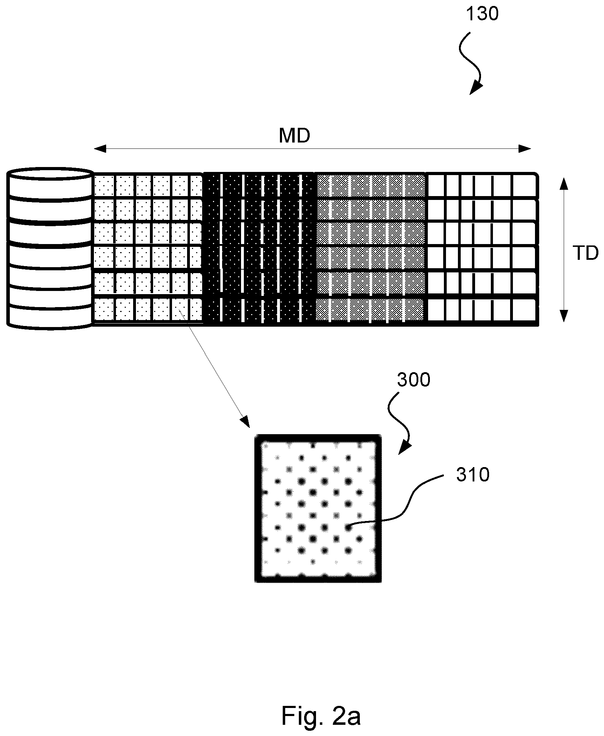

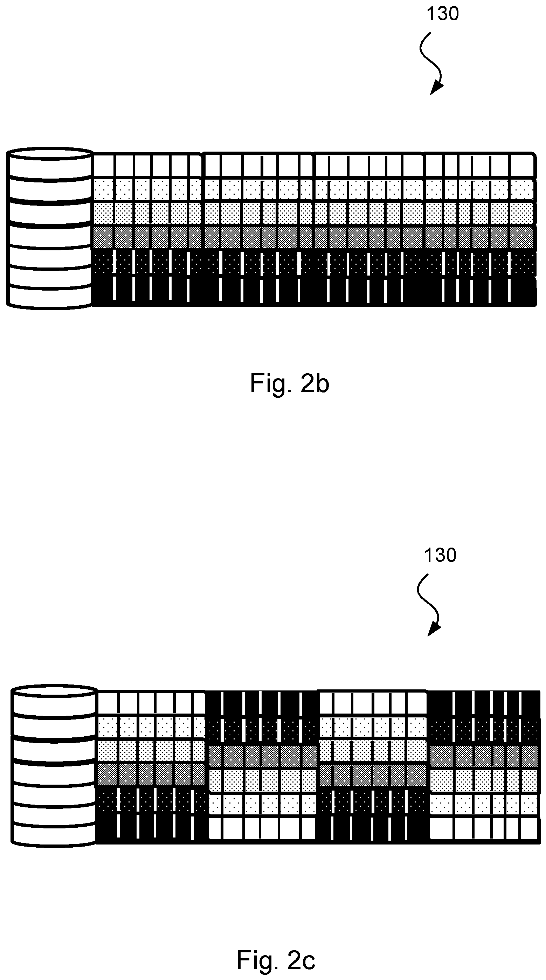

Fig. 2a illustrates a paperboard layer 130 having a design pattern where four different colored areas have been inkjet printed. Each of the four areas comprises different proportions of a first subset 310 of ink droplets, illustrated in Fig. 2a as comprising black color pigments, in relation to the full plurality of ink droplets 300. Typically, the different colored areas have different distributions of colors and/or different selections of colors. Figs. 2b and 2c show design patterns of increasing complexity where the need for an adaptable ink drying is evident. For such patterns, a non-adjustable drying method would involve a risk to dry out the paperboard if the IR drying power is controlled to sufficiently dry the ink droplets of light color. By determining S20 an adjusted drying power based on a determined proportion of a first subset 310 of the ink droplets in relation to the full plurality of ink droplets 300, the first subset 310 comprising color pigments of only one specific color, and evaporating S30 at least some of the solvent by applying hot air HA and/or infrared radiation IR at the adjusted drying power, solvent can be evaporated from the whole area of interest such that all color pigments are immobilized, while maintaining the moisture content of the paperboard layer 130. The proportion of the first subset 310 of the ink droplets in relation to the full plurality of ink droplets 300 may be substantially constant for a pre-defined cyclically repeated printing pattern, as illustrated in Figs. 2b and 2c. The adjusted drying power may be determined S20 for each pre-defined cyclically repeated printing pattern.

The proportion of a subset 310 of the ink in relation to the full ink 300, where the subset 310 comprises color pigments of a certain color, further affects the temperature of the ink 300. Dark color pigments will absorb more infrared radiation and thereby increase the surface temperature of the paperboard layer 130 of which it is printed upon. The step of evaporating S30 solvent may be performed such that the surface temperature of the paperboard layer 130 does not exceed 65°C. Preferably the surface temperature of the paperboard layer 130 does not exceed 60°C, and more preferably the surface temperature of the paperboard layer 130 does not exceed 56°C.

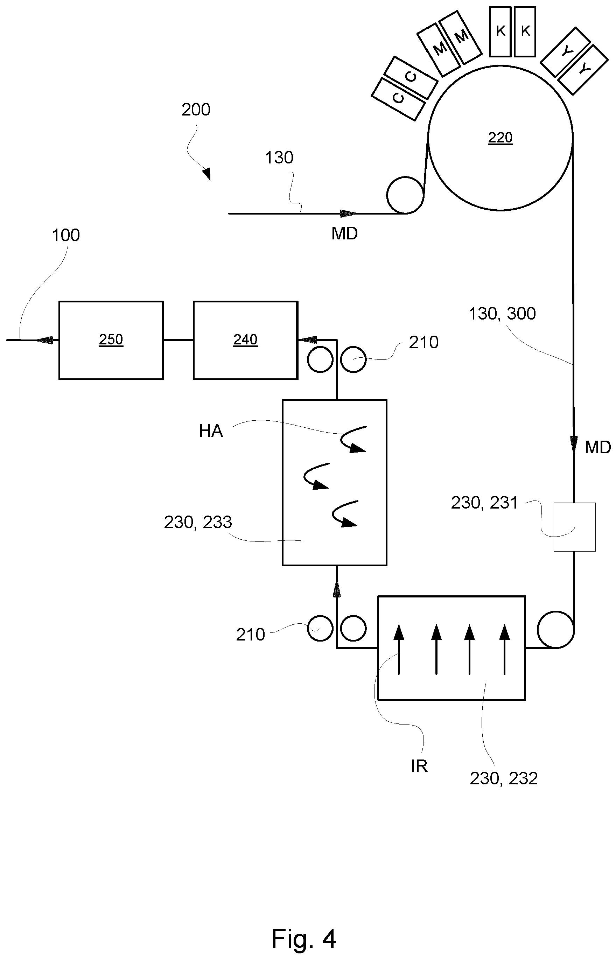

Turning back to Fig. 1, the method may further comprise providing S40 a crease line pattern to the paperboard layer 130 after evaporating the solvent. The crease line pattern facilitates the formation of packaging containers from the laminated packaging material web 100, not illustrated. The crease line pattern may be cyclically repeated in a machine direction MD. The machine direction MD may be defined as the direction parallel to the movement of the paperboard layer 130 through a manufacturing equipment such as a converting unit 200 as illustrated in Fig. 4, or as the circumferential direction of a roll of paper used for providing the paperboard layer 130 as illustrated in Figs. 2a-c. The laminate packaging material web 100 may have a machine direction MD, and a transverse direction TD, defined in perpendicular direction to the machine direction MD. The dimension of the laminate packaging material web in the machine direction MD may be substantially larger than in the transverse direction TD. During the method, the paperboard layer 130 may be transported along the machine direction as defined above at a substantially constant speed. A preferred converting speed is 200 m/min or higher. An example path of the paperboard layer 130 through a converting unit 200 is illustrated in Fig. 4.

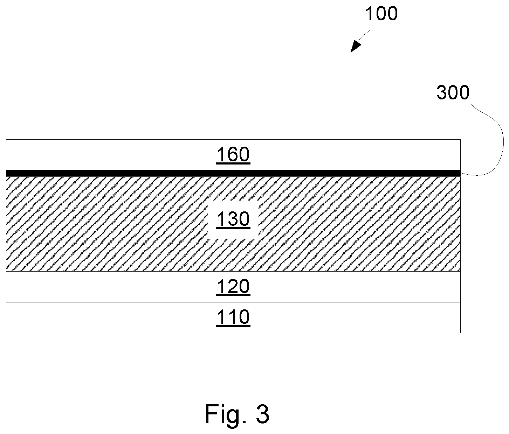

Referring still to Fig. 1, the method may further comprise laminating S50 at least a further layer 110, 120, 160 to the printed and creased paperboard layer 130. A cross-section of an example of a laminated packaging material web comprising a paperboard layer 130, printed with ink 300, and a plurality of layers 110, 120, 160 laminated to it is illustrated in Fig. 3. The laminated packaging material web 100 illustrated in the figure comprises two sealable layers 110, 160, arranged on the outside of the laminated packaging material web 100, topmost in the figure, to constitute the outside or exterior of a packaging container formed from the laminated packaging material web 100, and the inside of the laminated packaging material web 100, lowermost in the figure, to be in direct contact with a filled food product in the packaging container. The sealable layers 110, 160 are preferably liquid tight. The sealable layers 110, 160 may be heat sealable or comprise a thermoplastic material. Fig. 3 further illustrates a barrier layer 120, laminated to the paperboard layer 130, preferably on the inside, as defined above. The barrier layer 120 may comprise any barrier material that is suitable to maintain a food safe environment for the packaged liquid food product. This covers metals, such as aluminum foil, polymer materials, such as ethylene vinyl alcohol copolymers, EVOH, or polyamides, PA, polysaccharides such as starch or fibrillar or crystalline cellulose, polymer--based film substrates being provided with a barrier coating; the barrier coating being selected from metals, metal oxides, inorganic oxides, other inorganic compounds or carbon-based coatings, such as amorphous diamond-like carbon, DLC, coatings. The barrier layer 120 may be a cellulose based material and/or a composite material or multilayer coating material, for example comprising a non-metal material such as plastic, paper or cellulose-based material and a metal material for instance comprising Aluminum.

Although not illustrated, the method may comprise additional print substrate application, printing and/or drying steps. For instance, a surface treatment may be applied to the paperboard layer 130 which then is printed using flexographic printing, and dried by exposing the printed area to infrared radiation IR and/or hot air HA. A print substrate layer may subsequently be applied to the paperboard layer 130, and the print substrate layer may be dried by IR and/or hot air HA. Then, a décor layer may be inkjet printed S10 on the print substrate layer and dried S30 by exposing the paperboard layer 130 to infrared radiation IR and/or a flow of hot air HA. The paperboard layer 130 may be further printed using flexographic printing and dried again.

The print substrate layer may be applied to the paperboard layer 130 prior to inkjet printing S10. Applying a print substrate layer may for instance comprise coating the paperboard layer 130 with a pre-coating, priming the paperboard layer 130 by a plasma treatment, flame treatment, corona treatment or applying a surface conditioner, thereby conditioning the surface, for instance like, changing the topology, surface tension, wettability, properties relating to static electricity, or other surface properties. In specific embodiments, the print substrate layer may be a clay coating or a primed clay coating, for instance, to change surface properties of the paperboard. Typically, the clay coating will form a water repellant surface on the paperboard layer meaning that the solvent of the ink cannot migrate into the paperboard layer. This requires an increased drying power, as it is important to dry the ink fast before being subjected to further downstream processes. The print substrate layer may comprise a polymer film or a metalized polymer film. These alternatives also form a water repellant surface on the paperboard layer meaning that the solvent of the ink cannot migrate into the paperboard layer. This requires an increased drying power, as it is important to dry the ink fast before being subjected to further downstream processes. The print substrate layer may fully cover the paperboard layer 130, it may cover only the areas to be covered by the decor layer (plurality of ink droplets), or it may cover in intermediately sized area of the paperboard layer 130. The method may further comprise drying, if needed, the print substrate layer prior to printing the décor layer.

The paperboard layer 130 of the laminated packaging material web 100 may after the method of Fig. 1 have a crease line pattern, preferably a crease line pattern being cyclically repeated in the machine direction, and the moisture content will be 4% or more, between 5% and 10%, or, preferably, between 5% and 8.5%. The moisture content of the paperboard layer 130 may, after the method described above, not be significantly lower than the moisture content provided before the steps of the method is carried out. As an example, the provided moisture content of the paperboard layer 130 may be between 6% and 8.5% before the step of evaporating S30 solvent from the paperboard layer 130. This implies that the paperboard layer 130 of the laminated packaging material web 100 has not suffered moisture losses of a magnitude that would result in any defects of the paperboard layer 130, and that quality of the final product is ensured.

Turning now to Fig. 4, a converting unit 200 configured to manufacture a laminated packaging material web 100 is illustrated in a schematic view. The converting unit 200 may be configured to perform the method as described above and all aspects disclosed regarding the method may be implied also for the converting unit 200, as well as the other way around.

The converting unit 200 comprises a paperboard layer feeding station 210, preferably configured to continuously forward the paperboard layer 130 at a constant speed, more preferably in the machine direction. More than one feeding station 210 may be comprised in the converting unit 200, in Fig. 4, there are two feeding stations 210 illustrated.

The converting unit 200 further comprises an inkjet printer 220 configured to print an ink 300 comprising color pigments and a solvent on the paperboard layer 130. In the figure, the inkjet printer 220 is illustrated as a support cylinder and a plurality of printer heads for cyan C, magenta M, yellow Y, and black K and may be extended for multi color printing with for example orange, green, violet. It should be noted that the exact configuration of the inkjet printer 220 may be different depending on the particular application, for example, the inkjet printer 220 may comprise multiple printer heads arranged in the machine direction and/or the transverse direction in order to cover the entire width of the paperboard layer 130.

The converting unit 200 further comprises a drying station 230 configured to dry the ink 300 at an adjusted drying power by exposing the paperboard layer 130 to infrared radiation IR and a flow of hot air HA. The drying station 230 may comprise a separate hot air dryer 233 and infrared dryer 232, and the hot air dryer 233 may be arranged downstream the infrared dryer 232. The drying station 230 comprises a control unit 231 configured to determine the adjusted drying power based on a determined proportion of a first subset 310 of the ink in relation to the full ink 300, the first subset 310 comprising color pigments of only one specific color. The infrared dryer 232 may be arranged in direction substantially perpendicular to the machine direction MD such that it extends across the paperboard layer 130 in a transversal, or substantially transversal direction TD. The infrared dryer 232 may comprise a plurality of dryers. The control unit 231 may be programmed to control the operation of the individual dryers. Depending on the design pattern, each dryer may be controlled individually to provide a desired level of IR such that absorption by the paperboard layer is minimized. As an example, for drying of the paperboard layer 130 as illustrated in Fig. 2a, all individual dryers may be controlled to provide the same first adjusted drying power for the first area, then provide a second adjusted drying power for the second area etc. For drying the paperboard layer 130 as illustrated in Figs. 2b and 2c, each dryer may be controlled to provide individual adjusted drying powers for each area.

The converting unit 200 further comprises a creasing station 240 configured to provide a crease line pattern to the paperboard layer 130. The stations may be arranged in the following order, upstream to downstream: paperboard layer feeding station 210, inkjet printer 220, drying station 230, creasing station 240. The converting unit 200 may further comprise at least one lamination station 250 configured to laminate a plurality of layers **110,** 120, 160 to the printed and creased paperboard layer 130. The converting unit (200) may also comprise a print substrate station (not shown), in parallel to the method explained before, before the inkjet printer (220).

From the description above follows that, although various embodiments of the invention have been described and shown, the invention is not restricted thereto, but may also be embodied in other ways within the scope of the subject-matter defined in the following claims.

## Claims

1. A continuous in-line method for manufacturing a laminated packaging material web (100), comprising:
inkjet printing (S10) a plurality of ink droplets (300) on a paperboard layer (130), the ink droplets (300) comprising color pigments and a solvent,
determining (S20) an adjusted drying power based on a determined proportion of a first subset (310) of the ink droplets in relation to the full plurality of ink droplets (300), the first subset (310) comprising color pigments of only one specific color, and
evaporating (S30) at least some of the solvent by applying hot air (HA) and/or infrared radiation (IR) at the adjusted drying power such that the color pigments are immobilized
wherein the first subset (310) of the ink droplets has a dark color, a color having more black pigment compared to other colors, lighter colors, of the full plurality of ink droplets (300).

2. The method of claim 1, wherein the proportion of the first subset (310) of the ink droplets in relation to the full plurality of ink droplets (300) is substantially constant for a pre-defined cyclically repeated printing pattern, and wherein the adjusted drying power is determined (S20) for each pre-defined cyclically repeated printing pattern.

3. The method of claim 1 or 2, further comprising providing (S40) a crease line pattern to the paperboard layer (130) after evaporating the solvent.

4. The method of claim 3, wherein the crease line pattern is cyclically repeated in a machine direction (MD).

5. The method of any preceding claim, wherein the paperboard layer (130) is transported along a machine direction (MD) at a substantially constant speed.

6. The method of any preceding claim, wherein the solvent is evaporated by a combination of applying hot air (HA) and infrared radiation (IR), and wherein the hot air (HA) is applied after the infrared radiation (IR).

7. The method according to any of the preceding claims, wherein the infrared radiation (IR) has a spectral emission within 0.4 µm - 4 µm.

8. The method of any preceding claim, wherein the ink solvent comprises volatile organic content.

9. The method of any preceding claim, further comprising laminating S50 at least a further layer (110, 120, 160) to the printed paperboard layer (130).

10. The method of any preceding claim, wherein evaporating at least some of the solvent by applying hot air (HA) and/or infrared radiation (IR) at the adjusted drying power is performed such that the surface temperature of the paperboard layer (130) does not exceed 65°C, preferably the surface temperature of the paperboard layer (130) does not exceed 60°C, more preferably the surface temperature of the paperboard layer (130) does not exceed 56°C.

## Patentansprüche

1. Kontinuierliches In-Line-Verfahren zum Herstellen einer laminierten Verpackungsmaterialbahn (100), Folgendes umfassend:
Tintenstrahldrucken (S10) einer Vielzahl von Tintentröpfchen (300) auf eine Kartonschicht (130), wobei die Tintentröpfchen (300) Farbpigmente und ein Lösungsmittel umfassen,
Bestimmen (S20) einer angepassten Trocknungsleistung basierend auf einem bestimmten Anteil einer ersten Teilmenge (310) der Tintentröpfchen in Bezug auf die ganze Vielzahl von Tintentröpfchen (300), wobei die erste Teilmenge (310) Farbpigmente nur einer spezifischen Farbe umfasst, und
Verdampfen (S30) mindestens eines Teils des Lösungsmittels durch Anwenden von Heißluft (HA) und/oder Infrarotstrahlung (IR) mit der angepassten Trocknungsleistung, so dass die Farbpigmente immobilisiert werden,
wobei die erste Teilmenge (310) der Tintentröpfchen eine dunkle Farbe aufweist, wobei eine Farbe mehr schwarzes Pigment im Vergleich zu anderen Farben, helleren Farben, der ganzen Vielzahl von Tintentröpfchen (300) aufweist.

2. Verfahren nach Anspruch 1, wobei der Anteil der ersten Teilmenge (310) der Tintentröpfchen in Bezug auf die ganze Vielzahl von Tintentröpfchen (300) für ein vordefiniertes zyklisch wiederholtes Druckmuster im Wesentlichen konstant ist und wobei die angepasste Trocknungsleistung für jedes vordefinierte zyklisch wiederholte Druckmuster bestimmt wird (S20).

3. Verfahren nach Anspruch 1 oder 2, ferner umfassend Bereitstellen (S40) eines Faltlinienmusters auf der Kartonschicht (130) nach Verdampfen des Lösungsmittels.

4. Verfahren nach Anspruch 3, wobei das Faltenlinienmuster in einer Maschinenrichtung (MD) zyklisch wiederholt wird.

5. Verfahren nach einem der vorhergehenden Ansprüche, wobei die Kartonschicht (130) mit einer im Wesentlichen konstanten Geschwindigkeit entlang einer Maschinenrichtung (MD) transportiert wird.

6. Verfahren nach einem der vorhergehenden Ansprüche, wobei das Lösungsmittel durch eine Kombination aus Anwenden von Heißluft (HA) und Infrarotstrahlung (IR) verdampft wird und wobei die Heißluft (HA) nach der Infrarotstrahlung (IR) angewendet wird.

7. Verfahren nach einem der vorhergehenden Ansprüche, wobei die Infrarotstrahlung (IR) eine spektrale Emission innerhalb von 0,4 µm bis 4 µm aufweist.

8. Verfahren nach einem der vorhergehenden Ansprüche, wobei das Tintenlösungsmittel einen flüchtigen organischen Gehalt umfasst.

9. Verfahren nach einem der vorhergehenden Ansprüche, ferner umfassend Laminieren S50 mindestens einer weiteren Schicht (110, 120, 160) auf die gedruckte Kartonschicht (130).

10. Verfahren nach einem der vorhergehenden Ansprüche, wobei Verdampfen mindestens eines Teils des Lösungsmittels durch Anwenden von Heißluft (HA) und/oder Infrarotstrahlung (IR) bei der angepassten Trocknungsleistung so durchgeführt wird, dass die Oberflächentemperatur der Kartonschicht (130) 65 °C nicht überschreitet, vorzugsweise die Oberflächentemperatur der Kartonschicht (130) 60 °C nicht überschreitet, besonders bevorzugt die Oberflächentemperatur der Kartonschicht (130) 56 °C nicht überschreitet.

## Revendications

1. Procédé en ligne continu destiné à fabriquer une bande de matériau d'emballage stratifiée (100), comprenant :
l'impression par jet d'encre (S10) d'une pluralité de gouttelettes d'encre (300) sur une couche de carton (130), les gouttelettes d'encre (300) comprenant des pigments de couleur et un solvant,
la détermination (S20) d'une puissance de séchage ajustée sur la base d'une proportion déterminée d'un premier sous-ensemble (310) des gouttelettes d'encre par rapport à la pluralité entière de gouttelettes d'encre (300), le premier sous-ensemble (310) comprenant des pigments de couleur d'une seule couleur spécifique, et
l'évaporation (S30) d'au moins une partie du solvant par application d'air chaud (HA) et/ou de rayonnement infrarouge (IR) à la puissance de séchage ajustée de sorte que les pigments de couleur soient immobilisés,
dans lequel le premier sous-ensemble (310) des gouttelettes d'encre a une couleur sombre, une couleur ayant plus de pigment noir que d'autres couleurs, des couleurs plus claires, de la pluralité entière de gouttelettes d'encre (300).

2. Procédé selon la revendication 1, dans lequel la proportion du premier sous-ensemble (310) des gouttelettes d'encre par rapport à la pluralité entière de gouttelettes d'encre (300) est sensiblement constante pour un motif d'impression répété cycliquement prédéfini, et dans lequel la puissance de séchage ajustée est déterminée (S20) pour chaque motif d'impression répété cycliquement prédéfini.

3. Procédé selon la revendication 1 ou 2, comprenant en outre la fourniture (S40) d'un motif de lignes de pli sur la couche de carton (130) après évaporation du solvant.

4. Procédé selon la revendication 3, dans lequel le motif de lignes de pli est répété cycliquement dans un sens machine (MD).

5. Procédé selon l'une quelconque des revendications précédentes, dans lequel la couche de carton (130) est transportée dans un sens machine (MD) à une vitesse sensiblement constante.

6. Procédé selon l'une quelconque des revendications précédentes, dans lequel le solvant est évaporé par une combinaison d'application d'air chaud (HA) et de rayonnement infrarouge (IR), et dans lequel l'air chaud (HA) est appliqué après le rayonnement infrarouge (IR).

7. Procédé selon l'une quelconque des revendications précédentes, dans lequel le rayonnement infrarouge (IR) présente une émission spectrale dans la plage de 0,4 µm à 4 µm.

8. Procédé selon l'une quelconque des revendications précédentes, dans lequel le solvant de l'encre comprend un contenu organique volatil.

9. Procédé selon l'une quelconque des revendications précédentes, comprenant en outre la stratification S50 d'au moins une autre couche (110, 120, 160) sur la couche de carton (130) imprimée.

10. Procédé selon l'une quelconque des revendications précédentes, dans lequel l'évaporation d'au moins une partie du solvant en appliquant de l'air chaud (HA) et/ou un rayonnement infrarouge (IR) à la puissance de séchage ajustée est effectuée de telle sorte que la température de surface de la couche de carton (130) ne dépasse pas 65 °C, de préférence la température de surface de la couche de carton (130) ne dépasse pas 60 °C, plus préférablement la température de surface de la couche de carton (130) ne dépasse pas 56 °C.
